# EUROPÄISCHE PATENTANMELDUNG

(11) **EP 0 940 589 A2**
(43) Veröffentlichungstag der Anmeldung: **08.09.1999**
(21) Anmeldenummer: 98250324.5
(22) Anmeldetag: 11.09.1998
(51) Int. Cl.: F16B 21/16, A63B 22/08

(54) **Klemmgesperre**

(30) Priorität: 04.03.1998 DE 29804177 U; 04.03.1998 DE 29804180 U; 01.07.1998 DE 29813987 U
(71) Anmelder: Belling, Karl-Heinz, 16356 Blumberg (DE); Hoeseler, Ronald, 13347 Berlin (DE)
(72) Erfinder: Belling, Karl-Heinz, 16356 Blumberg (DE); Hoeseler, Ronald, 13347 Berlin (DE)
(74) Vertreter: Lüke, Dierck-Wilm, Dipl.-Ing.

(57) **Zusammenfassung**

Die Erfindung bezieht sich auf ein Klemmgesperre für ein in einem Klemmteil (1) linear bewegbares Verstellteil (2), mit mindestens einem, im Klemmteil (1) bewegbar gelagerten, auf das Verstellteil (2) einwirkenden Klemmkörper (5), einem Federelement (4) und einem Betätigungselement (3). Zur Vereinfachung des Klemmgesperres ist das Federelement (4) am Betätigungselement (3) angeordnet, das den Klemmkörper (5) mittels des Federelementes (4) in der Sperrstellung hält.

## Beschreibung

Die Erfindung bezieht sich auf ein Klemmgesperre für ein in einem Klemmteil linear bewegbares Verstellteil, mit mindestens einem, im Klemmteil bewegbar gelagerten, auf das Verstellteil einwirkenden Klemmkörper, einem Federelement und einem Betätigungselement.

Ein Klemmgesperre der gattungsgemäßen Art ist aus der DE 44 46 162 A1 in mehreren Ausführungsformen als lineares oder rotierbares Klemmgesperre vorbekannt. Das lineare Klemmgesperre umfaßt zwei unter spitzen Winkeln gegeneinandergerichtete, federbelastete, kugelförmige Klemmkörper, die in der Sperrichtung das Verstellteil linear arretieren. Die Entriegelung des Klemmgesperres erfolgt durch eine Bewegung der Klemmkörper gegen die Federkraft, z.B. durch Drehen eines Zapfens mittels eines Türgriffes, wodurch das Verstellteil linear bewegbar wird. Nachteilig ist, daß jeder Klemmkörper eine Feder nebst zugehöriger Bohrung erfordert und die Betätigung des Klemmgesperres über das Betätigungselement technisch aufwendig ist.

Der Erfindung liegt die Aufgabe zugrunde, das Klemmgesperre der gattungsgemäßen Art zu vereinfachen.

Zur Lösung dieser Aufgabe sieht die Erfindung vor, daß das Federelement am Betätigungselement angeordnet ist und das Betätigungselement den Klemmkörper mittels des Federelementes in der Sperrstellung hält. Hierdurch ist auch bei Verwendung mehrerer Klemmkörper nur ein Federelement erforderlich, das am Betätigungselement angeordnet ist. Hierdurch wird der Aufwand bei der Herstellung des Klemmgesperres verringert. Darüber hinaus hält das Betätigungselement den Klemmkörper mittels des Federelementes in der Sperrstellung, wodurch eine klare und eindeutige Betätigung des Klemmgesperres aus der Klemmstellung in die Entriegelungsstellung und umgekehrt möglich ist.

Weitere vorteilhafte Ausgestaltungen der Erfindung ergeben sich aus den Unteransprüchen.

Die Erfindung ist nachfolgend anhand eines in den Zeichnungen näher darstellten Ausführungsbeispieles eines Klemmgesperres für den Pedalantrieb eines Fahrrad-Ergometers näher erläutert. Es Zeigen:
- Fig. 1: eine Perspektivdarstellung des Fahrrad-Ergometers mit in der Pedalachse angeordnetem Klemmgesperre,
- Fig. 2: einen Querschnitt durch das Klemmteil und das Verstellteil des Klemmgesperres,
- Fig. 3: einen Teilschnitt gemäß der Linie III-III in Fig. 2,
- Fig. 4: eine der Fig. 3 entsprechende Darstellung,
- Fig. 5: einen Querschnitt durch das Verstellteil mit Nuten für Kugeln als Klemmkörper,
- Fig. 6: eine vergrößerte Darstellung des Betätigungselementes mit integrierten Klemmkörpern,
- Fig. 7: eine Vorderansicht des Klemmteils vor der Bearbeitung,
- Fig. 8: einen Teilschnitt durch das Klemmteil gemäß Linie VIII - VIII in Fig. 7,
- Fig. 9: die Vorderansicht des Klemmteils nach der Bearbeitung,
- Fig.10: einen Teilschnitt durch das Klemmteil gemäß Linie X - X in Fig. 9,
- Fig.11: ein vergrößertes Detail des Klemmgesperres in der Klemmstellung,
- Fig.12: ein der Fig.10 entsprechendes Detail in der Entriegelungsstellung,
- Fig.13: einen Querschnitt gemäß Fig.2 mit Zylindern als Klemmkörper,
- Fig.14: einen Querschnitt gemäß Linie XIV - XIV in Fig. 13,
- Fig.15: eine der Fig.14 entsprechende Darstellung des Klemmgesperres in der Sperrstellung,
- Fig.16: eine der Fig. 14 entsprechende Darstellung in der Entriegelungsstellung.
- Fig.17: die Ansicht eines Klemmkörpers aus Kugel und Zylinder,
- Fig.18: die Stirnansicht des Klemmkörpers in Fig.17
- Fig.19: eine alternative Ausführungsform des Klemmgesperres in einer Prinzipskizze und
- Fig.20: eine weitere alternative Ausführungsform in einer Prinzipskizze.

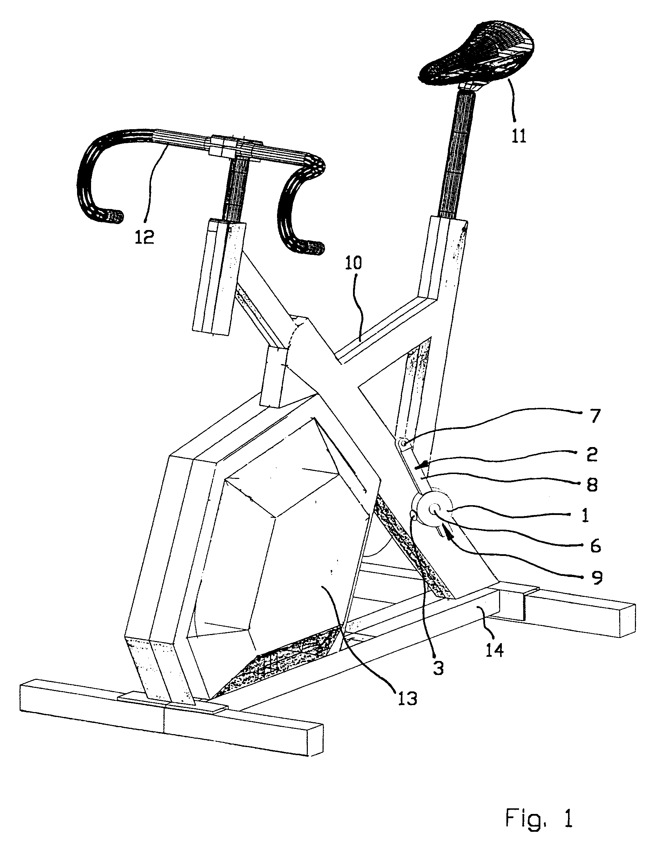

Das in Fig. 1 dargestellte Fahrrad-Ergometer umfaßt einen einem Fahrrad ähnlichen Rahmen 10 mit einem einstellbar befestigten Sattel 11, einem einstellbar befestigten Lenker 12, einem Antriebsgehäuse 13 mit den Belastungseinrichtungen des Fahrrad-Ergometers und einem Gestell 14 zum Aufstellen des Fahrrad-Ergometers auf dem Boden.

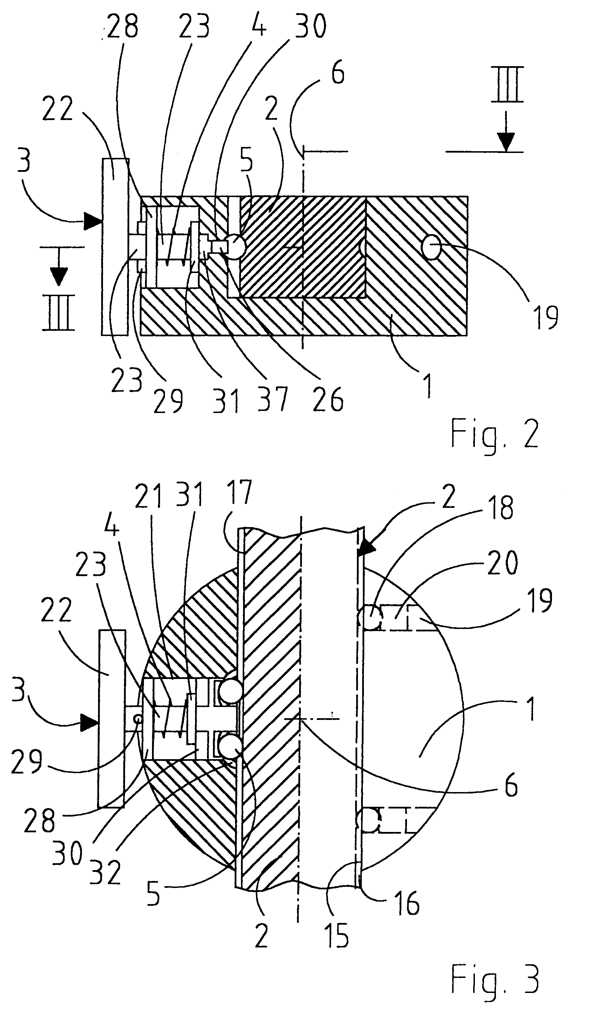

Unterhalb des Sattels 11 befindet sich die Tretlagerachse 6 mit einem an dieser angeordnetem Klemmgesperre 9 zur Einstellung der Pedalkurbellänge. Dieses besteht gemäß Fig. 2 u. 3 aus einem auf der Tretlagerachse 6 drehfest gehaltenen Klemmteil 1 mit in diesem geführten klemmbaren, die Pedalkurbel 8 bildenden Verstellteil 2 und einem Betätigungselement 3, wobei am freien Ende des Verstellteiles 2 die Pedalkurbelachse 7 für das nicht näher dargestellte Pedal des Fahrrad-Ergometers angeordnet ist.

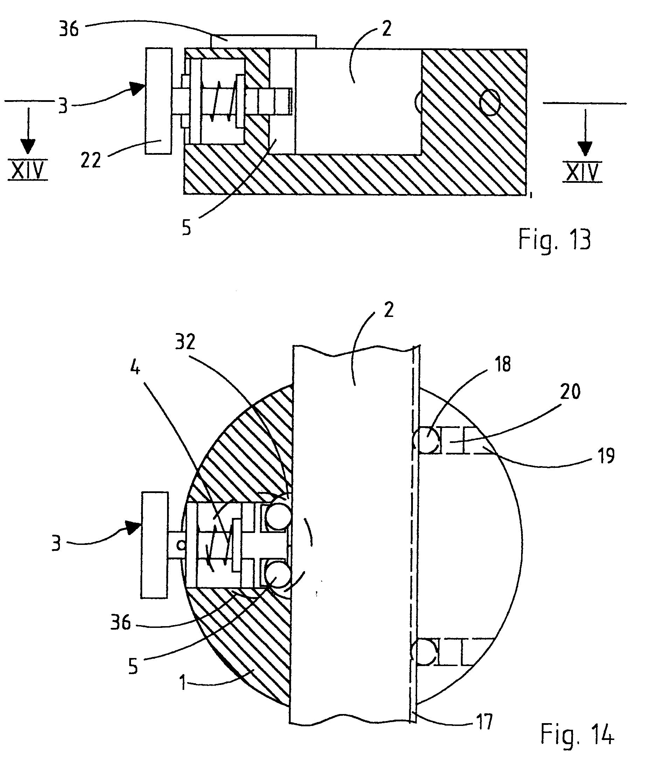

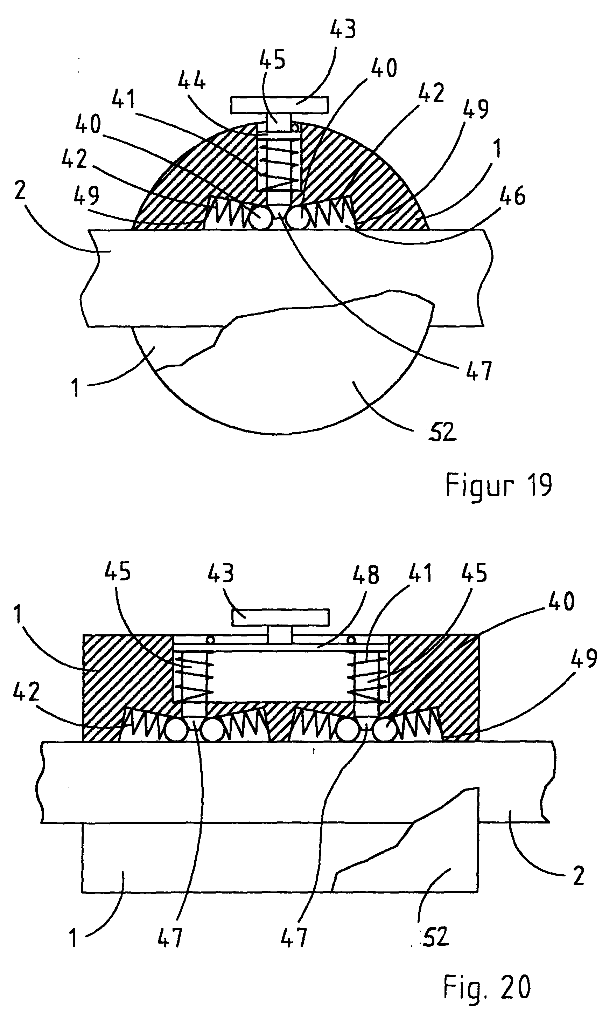

Das Klemmteil 1 besteht aus einem scheibenförmigen, massiven Metallteil, das in nicht näher dargestellter Weise auf der Tretlagerachse 6 drehfest gehalten ist. Senkrecht zu dieser erstreckt sich durch das Klemmteil 1 hindurch eine Längsnut 15 zur Aufnahme des im Querschnitt rechteckigen, die Pedalkurbel 8 bildenden Verstellteils 2. Dieses ist auf den beiden gegenüberliegenden, in der Längsnut 15 geführten Stirnseiten mit längs durchgehenden Nuten 16,17 versehen. Die in Fig. 3 links gezeigte Nut 17 im Verstellteil 2 ist nur für die kugelförmigen Klemmkörper 5 erforderlich und vorhanden. In die in Fig. 2 und 3 rechts dargestellte Nut greifen 16 Führungskugeln 18 ein,die in von der kreisförmigen Umfangsseite des Klemmteiles 1 eingelassene Bohrungen 19 eingesetzt und durch in die Bohrungen 19 fest eingeschraubte Madenschrauben 20 gehalten sind. Die Führungskugeln 18 führen die eine Längsseite des Verstellteiles 2 innerhalb der Längsnut 15 des Klemmteiles 1. Die durch Madenschrauben 20 in den Bohrungen 19 gehaltenen Führungskugeln 18 dienen zum einen zum Ausgleich zu großer Toleranzen der Längsnut 15 für das Verstellteil 2 und zum anderen zur Verhinderung, daß das Verstellteil 2 ohne weitere Sicherungen, wie z.B. das später beschriebene Verschlußteil 36 (Fig.13 u.14) aus dem Klemmteil 1 herausrutscht. Wird ein Verschlußteil 52 (Fig. 19 u.20) verwendet, kann bei genauen Toleranzen auf die Führungskugeln 18 verzichtet werden.

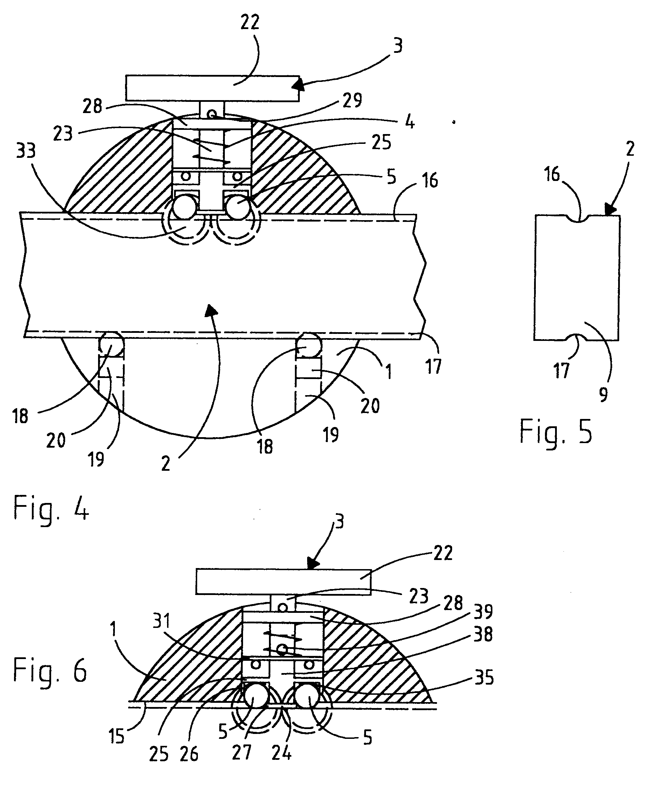

Auf der in Fig. 2 und 3 dargestellten linken Seite des Klemmteiles 1 ist in eine von der äußeren Umfangsseite des Klemmteiles 1 eingelassene größere Sacklochbohrung 21 das Betätigungselement 3 eingesetzt. Dieses besteht gemäß Fig. 6 aus einer äußeren kreisförmigen Betätigungstaste 22, einem an diese mittig eingesetzten Schaft 23, einer diesen am freien Ende begrenzenden Stirnplatte 24 und zwei in einem geringen Abstand vor der Stirnplatte 24 angebrachten winkelförmigen Kragarmen 25, deren abgewinkelte freie Schenkel 26 zusammen mit dem den Schaft 23 überragenden Drucknasen 27 der Stirnplatte 24 Aufnahmeöffnungen 35 für einen Klemmkörper 5 bilden. Die Klemmkörper 5 sind hier als Kugeln ausgebildet. Der Durchmesser des Klemmkörpers 5 ist etwas kleiner als der freie Abstand zwischen den Enden der Schenkel 26 und den äußeren Drucknasen 27 der Stirnplatte 24, so daß die Klemmkörper 5 zwischen den Schenkeln 26 und den Drucknasen 27 in die Aufnahmeöffnung 35 eingebracht werden können. Der Bereich der Kragarme 25 mit Schenkeln 26 ist bis zur Stirnplatte 26 als flaches Stanzteil 38 ausgeformt, das in einen Schlitz des runden Schaftes 23 eingesetzt und mittels eines Stiftes 39 mit diesem verbunden ist und das durch den zwischen Sacklochlochbohrung 21 und Längsnut 15 eingebrachten Schlitz 30 im Klemmteil 1 hindurchgreift. Die Teile des Betätigungselementes 3 bestehen aus Metall oder Kunststoff.

Die Fig. 2 bis 6 zeigen das in die Sacklochbohrung 21 des Klemmteiles 1 eingesetzte Betätigungselement 3,auf dessen Schaft 23 das Federelement 4 zwischen zwei bewegbare Scheiben 28 und 31 aufgeschoben ist, von denen die Scheibe 28 durch einen Stift 29 gehalten ist. Die Sacklochbohrung 21 ist durch einen kleinen Freiraum 37 verlängert, dessen Durchmesser dem Durchmesser des Schaftes 23 entspricht, der beim Betätigen der Betätigungstaste 22 in den Freiraum 37 eingreifen kann. Die Sacklochbohrung 21 ist ferner mit der Längsnut 15 im Klemmteil 1 über einen Schlitz 30 verbunden, durch den die Stirnplatte 24 mit den Kragarmen 25 hindurchragt, in welche die als Kugeln ausgebildeten Klemmkörper 5 von der Längsnut 15 für das Verstellteil 2 her eingesetzt werden. Das Federelement 4 stützt sich dabei über die auf dem Boden der Sacklochbohrung 21 aufliegende Scheibe 31 ab.

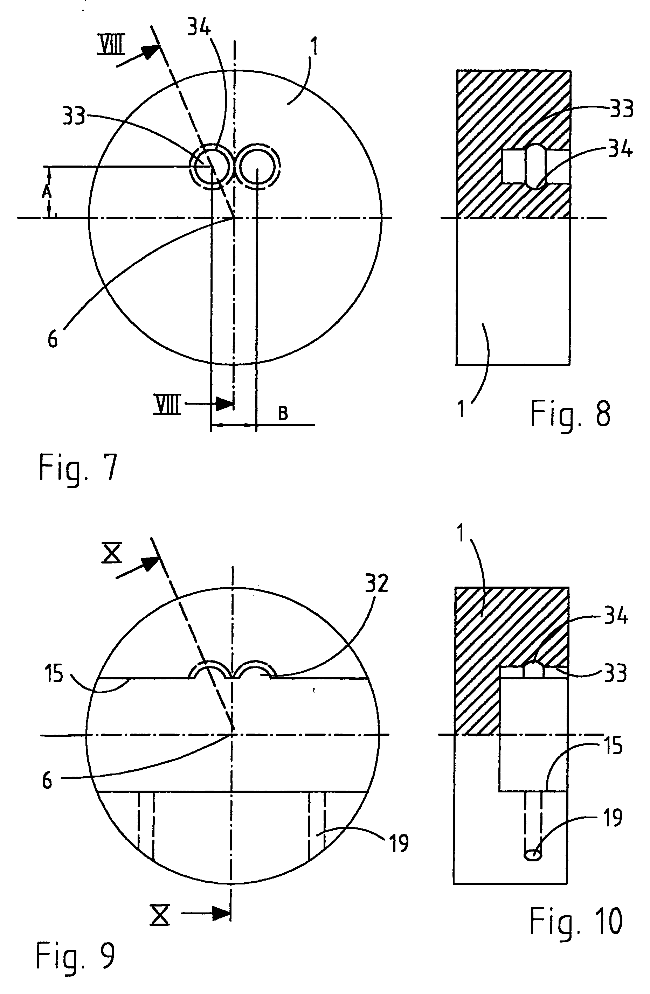

Im Bereich des Klemmteils 1,in dem sich nach Fig.2 bis 6 die Klemmkörper 5 als Kugeln befinden, sind kreisförmige Klemmkurven 32 eingebracht, mit denen die Klemmkörper 5 zusammenwirken. Eine Klemmung tritt auf, wenn die kugelförmigen Klemmkörper 5 die Klemmkurven 32 und das Verstellteil 2 in der Nut 17 berühren. Die Herstellung der Klemmkurven 32 wird anhand der Fig. 7 bis 10 nachfolgend erläutert. In das auf Außenmaß bearbeitete Klemmteil 1 werden Sacklochbohrungen 33 mit dem Abstand A zur Tretlagerachse 6 eingebracht. Etwa mittig in der Tiefe der Sacklochbohrungen 33 wird gemäß Fig. 8 je eine umlaufende Nut 34 eingefräst, deren Radius größer ist als der Radius der Sacklochbohrungen 33 und dem Radius der Klemmkörper 5 in Form der Kugeln angepaßt ist. Der Durchmesser der Sacklochbohrungen 33 ist im Ausführungsbeispiel doppelt so groß wie der Durchmesser der kugelförmigen Klemmkörper 5. Der Abstand B der Mittelachsen der Sacklochbohrungen 33 ist so gewählt, daß sich die Umfangsflächen der eingefrästen Nuten 34 berühren. Der Abstand kann auch größer gewählt werden. Günstig für die Herstellung und die äußere Form ist eine symmetrische Anordnung der Sacklochbohrungen 33 zur Tretlagerachse 6. Danach wird in das Klemmteil 1 die Längsnut 15 für das Verstellteil 2 eingefräst, wie es in Fig. 9 dargestellt ist. Hierbei werden sowohl die Sacklochbohrungen 34 als auch die eingefrästen Nuten 34 etwa zur Hälfte abgearbeitet, da der Abstand A gemäß Fig. 7 etwa der halben Breite der Längsnut 15 entspricht. Danach werden auf der gegenüberliegenden Seite der Längsnut 15 die Bohrungen 19 für die Führungskugeln 18 eingebracht, die nach dem Einsetzen des Verstellteiles 2 durch die Madenschrauben 20 arretiert werden, wozu in die Bohrungen 19 Gewinde geschnitten werden.

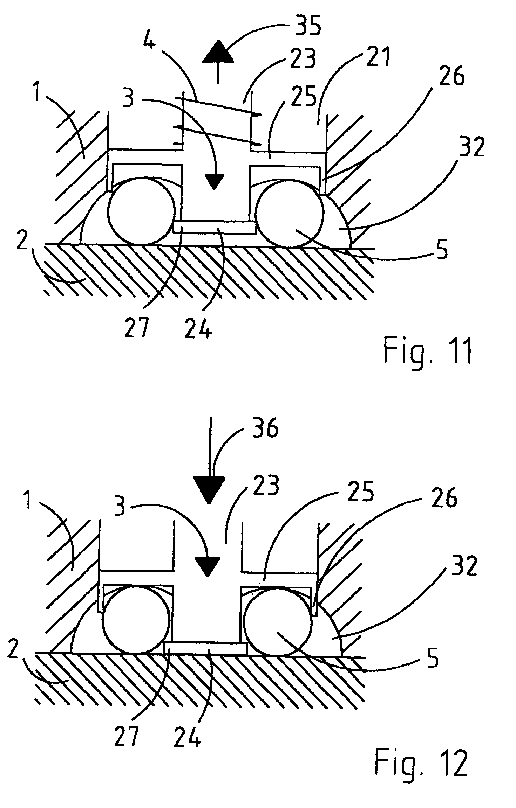

Die Klemm-/Sperrstellung des Klemmgesperres 9 wird anhand der Fig. 11 erläutert. Hierbei ist das Betätigungselement 3 unter Wirkung des Federelementes 4 in Richtung des Pfeiles 35 radial nach außen gedrückt. Die Stirnplatte 24 des Schaftes 23 drückt die kugelförmigen Klemmkörper 5 radial und axial nach außen, so daß diese zwischen Klemmkurve 32 und Nut 17 des Verstellteiles 2 eingeklemmt sind und eine Arretierung des Verstellteiles 2 im Klemmteil 1 bewirken. Die Klemmkurve 32 ist durch ein Kurventeil der in die Sacklochbohrung 33 eingefrästen Nut 43 gebildet (Fig. 7 bis 10).

In Fig. 12 ist die entsperrte Stellung der kugelförmigen Klemmkörper 5 dargestellt. Hierbei wird durch Druck auf das Betätigungselement 3 in Richtung des Pfeiles 36 der Schaft 3 mit seiner Stirnplatte 24 gegen das Verstellteil 2 bewegt,wobei die Stirnplatte 24 außer Eingriff mit den Klemmkörpern 5 kommt. Diese werden mittels der Schenkel 26 der Kragarme 25 radial nach innen und in der Aufnahmeöffnung 35 axial derart aufwärts bewegt, daß diese außer Eingriff mit den Klemmkurven 32 kommen. Das Verstellteil 2 kann in dieser Stellung im Klemmteil 1 axial verschoben werden.

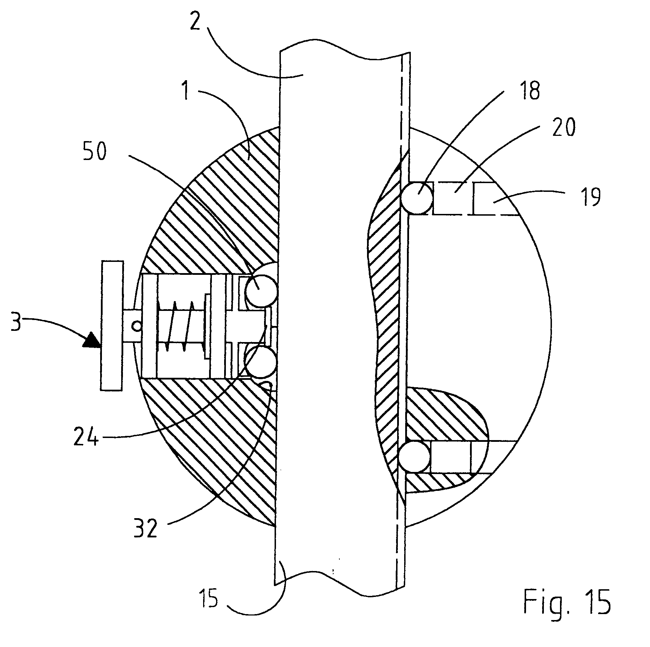

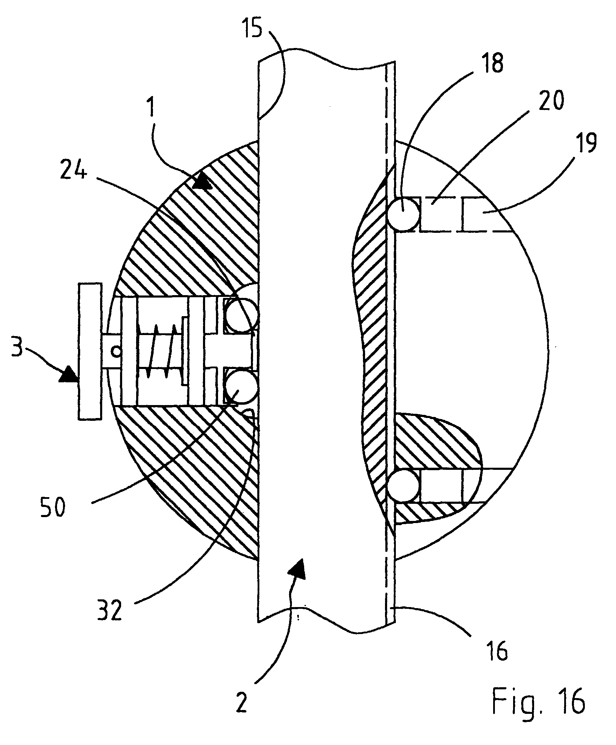

Die Fig. 13 bis 16 zeigen verschiedene Stellungen des Klemmgesperres 9, teilweise in gesperrter (Fig. 14 und 15) und teilweise in entsperrter Anordnung (Fig.16), wobei als Klemmkörper 50 Zylinder eingesetzt sind, deren Länge der Tiefe der Längsnut 15 entspricht. Auf der Stirnfläche des Klemmteiles 1 ist hierbei eine Verschlußplatte 36 aufgeschraubt, um eine zusätzliche Halterung und Führung für das Verstellteil 2 im Klemmteil 1 und für die als Zylinder ausgebildeten Klemmkörper 50 zu bewirken. Die zylindrischen Klemmkörper 50 werden hier bei eingedrückter Betätigungstaste 22 in die Aufnahmeöffnungen 35 des Betätigungselementes 3 eingeschoben und durch die Verschlußplatte 36 gesichert.

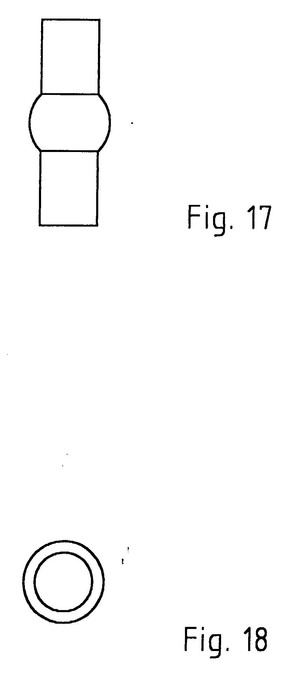

Fig.17 und 18 zeigen eine Sonderform des Klemmkörpers 51 als Zylinder mit mittig angeformter Kugel, die anstelle des zylindrischen Klemmkörpers 51 verwendet werden kann. Weitere Sonderformen, wie z.B. ein in der Mitte mit einer Nut versehener Zylinder, sind möglich.

Bei einer alternativen, konstruktiven Ausführungsform des Klemmgesperres 1 für einen Pedalantrieb kann auch das die Pedalkurbel 8 bildende Verstellteil 2 an der Tretlagerachse 6 drehfest gehalten sein, wobei die Pedale am Klemmteil 1 befestigt wird. Auch kann die vom Verstellteil 2 gebildetete Pedalkurbel 8 außermittig am Klemmteil 1 angeordnet werden.

Die Fig.19 und 20 zeigen alternative Ausführungsformen des Klemmgesperres 9. Hierbei sind im Klemmteil 1 zwei Klemmkugeln 40 gegeneinandergerichtet in Klemmschlitzen 46 angeordnet und mittels Klemmfedern 42 belastet, die sich an der Rückwand 49 der Klemmschlitze 46 abstützen. Zwischen die Klemmkugeln 40 greift die Spitze 47 des Schaftes 45 der Drucktaste 43 ein, die bei der Betätigung mittels einer am Schaft 45 befestigten Scheibe 44 gegen die Wirkung der Druckfeder 41 die Spitze 47 zwischen die Klemmkugeln 40 vorschiebt, die dann aus der in Fig. 19 gezeigten Sperrstellung in die nicht gezeigte Entriegelungsstellung gebracht werden. Die Fig. 20 zeigt einer Verdopplung des Schaftes 45 der Drucktaste 3 mittels einer dieser Zugehörigen Jochplatte 48, so daß mittels einer einzigen Drucktaste 43 gleichzeitig zwei Paare von Klemmkugeln 40 mittels der beiden Spitzen 47 aus der Sperr- in die Entriegelungsstellung gebracht werden können. Bei beiden alternativen Ausführungsformen ist das Klemmteil 1 von einer Verschlußplatte 52 bedeckt, die nach dem Zusammenbau des jeweiligen Klemmgesperres 9 angeschraubt wird, um zu verhindern, daß das Verstellteil 2, die Klemmfedern 42 und die Klemmkugeln 40 aus dem Klemmteil 1 herausfallen.

Das Klemmgesperre 9 kann bei Pedalen und/oder Pedalarmen eines Fahrrad-Ergometers oder bei einem anderen, mit Beinen oder Armen angetriebenen oder diese antreibenden Bewegungstherapiegerät aus dem Rehabilitations-Bereich verwendet werden.

Das erfindungsgemäße Klemmgesperre für lineare Verstell- und Bewegungseinheiten ist hoch belastbar, schlupffrei und kontinuierlich verstellbar. Die Klemmung wird nur durch Tastendruck gelöst und durch Loslassen der Taste (Betätigungselement 3) wieder hergestellt.Der Tastendruck kann manuell oder durch Zusatzeinrichtungen, wie z.B. durch einen elektrischen oder hydraulischen Antrieb, erfolgen. Das Prinzip der schlupffreien Klemmung ist für alle linearen Verstellund Bewegungseinheiten nicht nur in den Bereichen Medizin, Rehabilitation und Sport, sondern auch in den Bereichen des Werkzeugmaschinen- und des Gerätebaus anwendbar. Je nach Form des zu klemmenden Klemmteiles werden die Klemmkörper als Kugeln, Zylinder oder Sonderformen angepaßt. Es muß regelmäßig gewährleistet sein, daß die Auflageflächen der Kugeln oder Zylinder der Zug- oder Druckkraft angepaßt ist. Das gilt für die Kugel- und Zylinderform der Klemmkörper ebenso wie die dem Verstellteil 2 zugeordnete Form.

Werden z.B. Vierkantrohre ineinander geschoben, ist es günstig, über Eck Zu klemmen. Die Zylinder müssen in diesem Falle mittig eine 90 Grad-Kerbung erhalten. In dieser befindet sich nach dem Zusammenbau eine Kante des inneren Verstellteils. Der Vorteil der über Eck-Klemmung liegt darin, daß Maßabweichungen ausgeglichen werden. Werden Rundrohre ineinander geschoben, müssen die Zylinder mittig eine Kerbung erhalten, die dem inneren Rohr abgepaßt ist. An der äußeren Führung wird der Klemmkörper mit den spitzwinkligen Freiräumen, in denen sich die passenden Zylinder mit den zugehörigen Federn befinden, mit der Betätigungstaste und ihrer Feder und wenn nötig mit Abdeckplatten angebracht.

Das Profil des Verstellteiles 2 kann jede Form haben, die aber auf die Form der Kugeln oder Zylinder abgestimmt werden muß, wobei für jede Klemmrichtung mehrere Kugeln oder Zylinder unter Berücksichtigung der angegebenen Bedingungen eingesetzt werden können.

Bei dem erfindungsgemäßen Klemmgesperre kann das kontinuierlich verstellbare Klemmteil in Form eines Pedalarmes auch mit einer Skala versehen werden, um die Längenänderungen des Pedalarmes anzuzeigen. Die Verstellung erfolgt durch Daumendruck auf eine Taste, wodurch die Klemmung gelöst wird, der Pedalarm auf die gewünschte Länge geschoben und durch Loslassen der Taste der Klemmzustand wieder hergestellt wird. Damit wird die Bedienfreundlichkeit auf ein ansprechendes Niveau gehoben, der Zeitaufwand der Längenverstellung des Pedalarmes verkürzt und die Klemmung nach dem Einstellen sichergestellt. Die Korrektur einer irrtümlich eingestellten Länge des Pedalarmes ist problemlos möglich. Die Klemmung ist schlupffrei. Beim Klemmgesperre wird erreicht, daß die Klemmkörper durch Tastendruck aus ihrer Klemmposition gedrückt werden. Nach dem Loslassen der Taste wird diese durch eine Feder in ihre Ausgangslage gebracht. Dabei drückt die Taste die Klemmkörper wieder in ihre Klemmstellung. Die Klemmkörper besitzen daher keine zusätzlichen Federn.

### BEZUGSZEICHENLISTE

- 1: Klemmteil
- 2: Verstellteil
- 3: Betätigungselement
- 4: Federelement
- 5: Klemmkörper als Kugel
- 6: Tretlagerachse
- 7: Pedalkurbelachse
- 8: Pedalkurbel
- 9: Klemmgesperre
- 10: Rahmen
- 11: Sattel
- 12: Lenker
- 13: Antriebsgehäuse
- 14: Gestell
- 15: Längsnut
- 16: Nut
- 17: Nut
- 18: Führungskugel
- 19: Bohrung
- 20: Madenschraube
- 21: Sacklochbohrung
- 22: Betätigungstaste
- 23: Schaft
- 24: Stirnplatte
- 25: Kragarm
- 26: Schenkel
- 27: Drucknase
- 28: Scheibe
- 29: Stift
- 30: Schlitz
- 31: Scheibe
- 32: Klemmkurve
- 33: Sacklochbohrung
- 34: Nut
- 35: Aufnahmeöffnung
- 36: Verschlußplatte
- 37: Freiraum
- 38: Stanzteil
- 39: Stift
- 40: Klemmkugel
- 41: Druckfeder
- 42: Klemmfeder
- 43: Drucktaste
- 44: Scheibe
- 45: Schaft
- 46: Klemmschlitz
- 47: Spitze
- 48: Jochplatte
- 49: Rückwand
- 50: Klemmkörper als Zylinder
- 51: Klemmkörper in Sonderform
- 52: Verschlußplatte

## Patentansprüche

1. Klemmgesperre für ein in einem Klemmteil (1) linear bewegbares Verstellteil (2), mit mindestens einem, im Klemmteil (1) bewegbar gelagerten, auf das Verstellteil (2) einwirkenden Klemmkörper (5), einem Federelement (4) und einem Betätigungselement (3),
**dadurch gekennzeichnet,**
daß das Federelement (4) am Betätigungselement (3) angeordnet ist und das Betätigungselement (3) den Klemmkörper (5) mittels des Federelementes (4) in der Sperrstellung hält.

2. Klemmgesperre nach Anspruch 1, dadurch gekennzeichnet, daß das Betätigungselement (3) eine Aufnahmeöffnung (35) für den Klemmkörper (5) aufweist.

3. Klemmgesperre nach Anspruch 2, dadurch gekennzeichnet, daß das Klemmteil (1) eine Längsnut (15) zur Aufnahme des Verstellteils (2) und mindestens eine quer zur Längsnut (15) und von dieser etwa mittig durchschnittene Klemmkurve (32) zur Aufnahme des Klemmkörpers (5) sowie eine senkrecht zur Längsnut (15) im Klemmteil (1) angeordnete Sacklochbohrung (21) zur Aufnahme des Betätigungselementes (3) aufweist.

4. Klemmgesperre nach Anspruch 1, dadurch gekennzeichnet, daß das Betätigungselement (3) als am Klemmteil (1) gelagerte, federbelastete Drucktaste ausgebildet ist.

5. Klemmgesperre nach Anspruch 4, dadurch gekennzeichnet, daß die Drucktaste (22) mindestens eine Aufnahmeöffnung (35) für einen Klemmkörper (5) aufweist.

6. Klemmgesperre nach Anspruch 1, dadurch gekennzeichnet, daß der Klemmkörper (5) als Kugel oder Walze ausgebildet ist.

7. Klemmgesperre für ein in einem Klemmteil (1) linear bewegbares Verstellteil (2), mit mindestens einem, im Klemmteil (1) bewegbar gelagerten, auf das Verstellteil (2) einwirkenden Klemmkörper (5), einem Federelement (4) und einem Betätigungselement (3),
**dadurch gekennzeichnet,**
daß federbelastete Klemmkörper (5,50) gegeneinandergerichtet im Klemmteil (1) und zwischen die Kemmkörper (5,50) eine federbelastete Drucktaste (42) zur Entriegelung der Klemmkörper (5,50) aus der Sperrstellung gelagert sind.

8. Verwendung eines Klemmgesperres nach einem oder mehreren der Ansprüche 1 bis 7 bei Pedalen und/oder Pedalarmen eines Fahrrad-Ergometers oder einem anderen, mit Beinen oder Armen angetriebenen oder diese antreibenden Bewegungstherapiegerät aus dem Rehabilitations-Bereich.
